# EUROPEAN PATENT APPLICATION

(11) **EP 3 586 686 A1**
(43) Date of publication of application: **01.01.2020**
(21) Application number: 18179473.6
(22) Date of filing: 25.06.2018
(51) Int. Cl.: A47J 19/02, A47J 43/07

(54) **A JUICER AND A JUICING METHOD**

(71) Applicant: Koninklijke Philips N.V., 5656 AE Eindhoven (NL)
(72) Inventor: OLIPITZ, Kathrin, 5656 AE Eindhoven (NL)
(74) Representative: de Haan, Poul Erik

(57) **Abstract**

A juicer combines a tool such as a rotary cutter and a rotary sieve. After processing with the tool (e.g. blending) the food to be juiced is passed to the rotary sieve. The processing time with the tool dictates the consistency of the eventual output.

## Description

### FIELD OF THE INVENTION

This invention relates to juicers.

### BACKGROUND OF THE INVENTION

Healthy fruit (and/or vegetable) drinks are increasingly popular, and many different types of kitchen appliance are available for blending and/or juicing to create these drinks.

Different ingredients will give rise to different consistencies. The consistencies may be categorized as mousse, thick smoothie, thin smoothie, fibrous juice and clear juice.

Juicers, and more generally food processors, blenders, masticators, smoothie makers and other kitchen devices, produce beverages with one or two of these categories of consistency depending on the fruit or vegetable.

For example, blenders and smoothie makers generally produce mousse or thick smoothies because they keep all fibers in the beverage. By adding additional fluids like water or milk, the consistency can be changed to a thin smoothie or even a fibrous juice for some fruits. A disadvantage of this process is that the beverage is often tasteless because of the dilution.

Masticators and centrifugal juicers generally produce mainly clear and fibrous juice consistencies by separating solid and liquid contents of the fruit or vegetables by the use of sieves and meshes. The consistency is strongly dependent on the fruit and device type. Some devices are also capable of producing smoothies as a second device setting.

The consistency of the beverage mainly depends on the amount of solids (fibers) in the specific fruit or vegetable e.g. cellulose and on the processing principle.

Most existing products offer one or at most two consistency settings (e.g. clear juice and fibrous juice). Most existing kitchen devices are also limited to some fruit and vegetable types which match the device process.

One known way to provide a more selectable consistency is to use a so-called peeling tube, which is inserted into a centrifuge drum to a controllable depth. Juice of selectable thickness is then delivered by the kinetic energy of the centrifuge rotation. However, this is difficult to control and results in a complex appliance.

It would be desirable to be able to produce fresh juice from fruits and vegetables with the option to freely choose the consistency of the beverage for every fruit or vegetable, according to personal taste preferences or health needs (for example a need for dietary fibers). There is a need for this flexibility in an appliance which is simple to manufacture and simple to use.

### SUMMARY OF THE INVENTION

The invention is defined by the claims.

Examples in accordance with an aspect of the invention provide a juicer for extracting juice from food ingredients comprising:
a cavity for receiving the food ingredients, the cavity having an outlet which is adapted to be opened and closed;
a tool in the cavity for releasing juice from the food ingredients;
a rotary sieve for receiving food ingredients processed by the tool from the cavity outlet, the rotary sieve having an outer sieve wall;
a drive system for operating the tool to cut the food ingredients in the cavity, and for rotating the rotary sieve so as to pass juice through the outer sieve wall, wherein the drive system enables independent control of the tool and the rotating of the sieve; and
a juice outlet for providing juice which has passed through the outer sieve wall.

This juicer is able to provide a controllable juice characteristic, by controlling the cutting (or shredding) process and then the sieving process, as independent functions in a two-stage sequence. The sieving is based on a centrifugal process by which juice is forced through the rotating sieve by centrifugal forces. A longer cutting time (and/or larger cutting speed) means a fine size liquid results (with small particle sizes of the fibers) so that both juice and pulp can pass through the sieve. A shorter cutting time (and/or cutting speed) means a coarse size liquid results (with larger particle sizes of the fibers) so that less pulp can pass through the sieve. Thus, the nature of the juice is controllable simply based on the time sequence of the operation of the juicer. The juicer may be controlled to provide clear juice, cloudy juice, a thin smoothie or a thick smoothie. These time sequences may be preset for different food types (fruits, vegetables) and different desired juice consistencies.

The cutting and centrifugal sieving (juicing) operations are controlled independently, i.e. at different times and/or speeds. Thus, each operation maybe optimized.

The tool for example comprises a rotary cutter such as a blender tool.

This is used to perform an initial breaking up of a foodstuff (typically fruit or vegetable) before juice extraction by the centrifuge.

The rotary cutter is for example controllable with a first speed or range of speeds, and the rotary sieve is controllable with a different second speed or range of speeds. Different speeds are appropriate for cutting (blending) and for centrifugal sieving.

The rotary cutter and the rotary sieve are for example adapted to rotate about an upright axis in use. This provides a compact arrangement, in which food ingredients may be loaded into the juicer from above. The sieve operation displaces the food ingredients radially outwardly.

The drive system is for example adapted to operate the tool to cut the food ingredients with the rotary sieve stationary, and then to rotate the rotary sieve so as to pass juice through the outer sieve wall. During the sieve operation, the tool maybe stationary or it may still be operated.

In one example, the cavity outlet is at the base of the cavity and the juicer comprises a valve for opening and closing the outlet. The valve may then be controlled by the juicer as part of an overall sequence of operations, in which the cutting/blending time is controlled before the blended juice is released to the sieve.

In another example, the rotary sieve comprises a base wall and the outer sieve wall, wherein the base wall defines the base of the cavity and the cavity further comprises a side wall. The base wall of the sieve thus closes the cavity outlet, and when the cavity outlet is opened, the food passes to the outer sieve wall.

The base wall or the side wall may be slidable parallel to an axis of rotation of the rotary sieve thereby to open or close the cavity outlet, thereby to allow or prevent the passage of food ingredients to the outer sieve wall. In this way, the cavity may lift or the sieve may drop to open the cavity and allow the liquid to pass to the sieve.

In these examples, the cavity outlet may be opened induced by rotation of the rotary sieve. For example a rotation may induce a movement along the rotation axis, or a valve may be opened by centrifugal forces. The operation and/or speed of rotation of the sieve unit may thus be controllable thereby to provide indirect control of the opening and closing of the cavity outlet. In this way, control signals do not need to be sent to a valve-type arrangement in order to open and close the cavity outlet. Instead, the rotation of the sieve is used as a control parameter.

In another example, the juicer may comprise a manual control for opening and closing the cavity outlet.

Thus, there are many alternatives for controlling the flow from the cavity to the sieve.

The outer sieve wall may comprise an annular wall which is sloped with respect to an axis of rotation of the rotary sieve. This slope means that food ingredients which do not pass through the sieve are driven up the slope, thereby preforming a self-cleaning function to prevent blockage of the sieve.

A collection region may be provided for collecting non-sieved food ingredients which have been forced centrifugally over the annular wall. The food ingredients which do not pass the sieve, i.e. the pulp, are thus collected.

The invention also provides a method for extracting juice from food ingredients, comprising:
placing food ingredients in a cavity which has a cavity outlet;
operating a tool in the cavity to release juice from the food ingredients with the cavity outlet closed;
opening the cavity outlet to allow the food ingredients to flow to a rotary sieve;
rotating the rotary sieve so as to pass juice through an outer sieve wall; and
providing juice which has passed through the outer sieve wall as the juicer outlet.

The cavity outlet may be opened by moving the rotary sieve and the cavity relative to each other either automatically or in response to manual input. Alternatively, the cavity outlet may be opened by operating a valve.

The method may comprise comprising collecting non-sieved food ingredients which have been forced centrifugally over the outer sieve wall.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a juicer; and
Figs. 2A to 2D shows the different phases of operation of the juicer.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a juicer which combines a tool such as a rotary cutter and a rotary sieve. After processing with the tool (e.g. blending) the food to be juiced is passed to the rotary sieve. The processing time with the tool dictates the consistency of the eventual output.

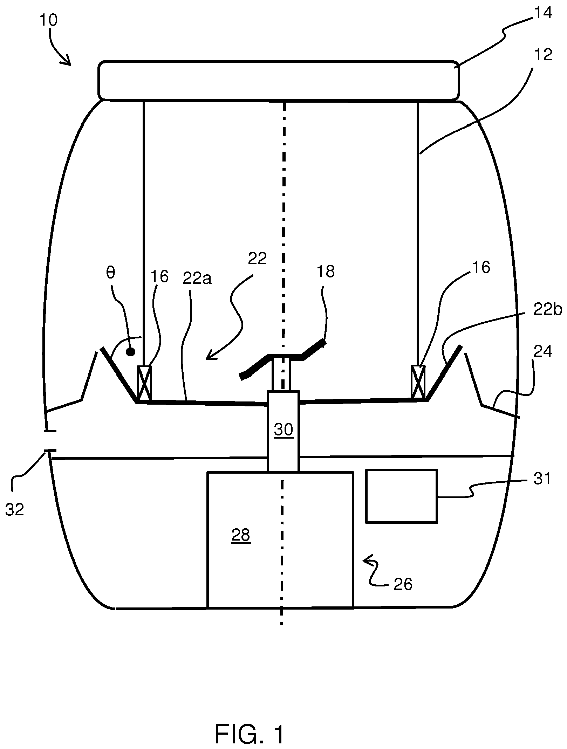

Fig. 1 shows a juicer 10 for extracting juice from food ingredients. It shows a side view in cross section.

The juicer comprises a cavity 12 for receiving the food ingredients from an open top, which is then closed by a lid 14. The cavity has an outlet which can be opened and closed. Two valves 16 are shown for this purpose. There may be a single outlet and associated valve, or two or more outlets and associated valves.

The outlets and valves define the lowest point of the cavity so that food ingredients (once they are in liquid form) flow to the outlet or outlets under gravity.

A tool such as a rotary cutter 18 is in the cavity for cutting the food ingredients and thereby releasing juice. The rotary cutter is for example a blender tool, although any cutting tool for cutting, crushing or shredding may be used. By way of example, the processing may result in a particle size of below 250µm, for example with at least 90% of particles with a size of 250 µm or less.

A rotary sieve 22 is positioned for receiving food ingredients from the cavity 12 from the outlet or outlets. The rotary sieve has a base part 22a which is liquid impermeable and an outer sieve wall 22b. The outer sieve wall comprises an array of openings though which juice is able to pass when a centrifugal force is applied by rotation of the sieve.

The outer sieve wall 22b is sloped outwardly and upwardly. Thus, an outer rim is higher and radially further out than the interface between the outer sieve wall 22b and the base 22a. The outer sieve wall makes an angle θ to a side wall of the cavity 12, i.e. to the vertical in use. This angle dictates how long the pulp remains in contact with the sieve wall. A small angle θ corresponds to a very upright sieve wall, so that the liquid rises slowly up the wall. A large angle θ results in a more rapid flow over the sieve wall.

By way of example, the angle θ may be in the range 20 to 60 degrees, for example in the range 30 to 40 degrees, such as 35 degrees.

The pulp rides up the sieve wall and eventually flows over the top, where it is collected by a collection region 24 against the outer wall of the juicer. The can be cleaned by removing the lid 14 and cavity 12.

A drive system 26 is provided for rotating the rotary cutter 18 to cut the food ingredients in the cavity and for rotating the rotary sieve 22 so as to pass juice through the outer sieve wall 22b.

The rotary cutter and the rotary sieve rotate about an upright axis in use in the example shown. This provides a compact arrangement, in which food ingredients may be loaded into the juicer from above with the lid removed.

The drive system 26 comprises a motor 28 and a freewheeling clutch 30. Operation of the motor and clutch enables independent control of the rotating of the rotary cutter 18 and the rotating of the sieve 22. The drive system for example rotates the rotary sieve in one direction and the rotary cutter in an opposite direction. When one device is being rotated, the other is in a freewheel state, and slows.

However, this is only one option.

The rotary cutter may be controllable with a first speed or range of speeds, and the rotary sieve is controllable with a different second speed or range of speeds. Different speeds are appropriate for cutting (blending) and for centrifugal sieving.

The rotary cutter for example operates between 10000 and 25000 rpm under load. The centrifugal sieve operation for example genrally operates between 500 and 5000 rpm, for example with a maximum between 6000rpm and 7000rpm. Higher rpm values may not be desired for safety reasons, whereas lower rpm values may give excessively long processing times.

A controller 31 is for controlling the motor and clutch, and optionally also for controlling the valves 16 when they are provided.

The juice which has passed through the rotary sieve is delivered from a juice outlet 32.

The juicer is able to provide a controllable juice characteristic, by controlling the cutting (or shredding) process and then the sieving process, as independent functions in a two-stage sequence. A longer cutting time (and/or larger cutting speed) means a more finely cut liquid results so that both juice and pulp can pass through the sieve. A shorter cutting time (and/or cutting speed) means a more coarsely coarse size liquid results (with larger particle sizes of the fibers) so that less pulp can pass through the sieve. Thus, the nature of the juice is controllable simply based on the time sequence of the operation of the juicer. The juicer may be controlled to provide clear juice, cloudy juice, a thin smoothie or a thick smoothie. These time sequences may be preset for different food types (fruits, vegetables) and different desired juice consistencies.

The sieve for example has openings of diameter 350µm.

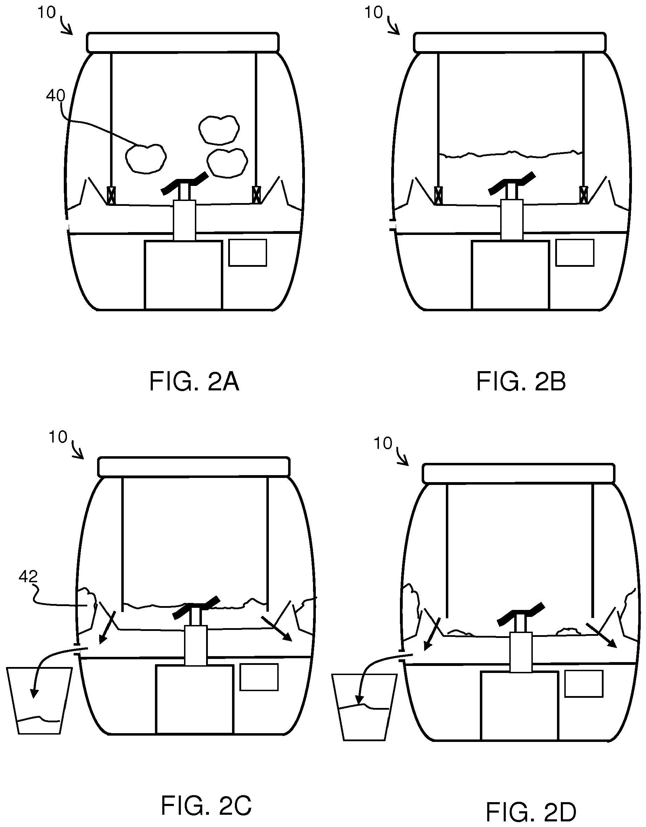

Figs. 2A to 2D show the sequence of operation.

In Fig. 2A, food ingredients 40 such as fruit and/or vegetables are loaded into the cavity.

In Fig. 2B, the tool is used to cut (or shred or crush) the food ingredients with the rotary sieve stationary. This performs a blending process. The outlet from the cavity is closed and the rotary sieve is stationary (to save power or to keep the liquid in the cavity for examples where the rotation itself opens the cavity outlet).

In Fig. 2C, the cavity outlet is opened so the blended liquid flows to the rotary sieve, which is driven to rotate. The tool may be stationary or it may be maintained rotating at this time. Juice starts to be delivered from the juice outlet. Also, pulp 42 is collected in the collection region.

In Fig. 2D, the juice delivery is complete.

In the example above, valves are shown for controlling the passage of liquid from the cavity to the rotary sieve. The valves may then be controlled by the juicer as part of an overall sequence of operations, in which the cutting/blending time is controlled before the blended juice is released to the sieve. However, there are many possible examples.

In another example, the base wall 22a of the rotary sieve defines the base of the cavity and the cavity further comprises a side wall. The base wall of the sieve thus closes the cavity outlet, and when the cavity outlet is opened, the food passes to the outer sieve wall.

The base wall or the side wall may be slidable parallel to an axis of rotation of the rotary sieve thereby to open or close the cavity outlet, thereby to allow or prevent the passage of food ingredients to the outer sieve wall. In this way, the cavity may lift up to open the cavity beneath, or the sieve may drop to open the cavity above.

In these examples, the cavity outlet may be opened induced by rotation of the rotary sieve. For example, a rotation may induce a movement of the cavity or the rotary sieve along the rotation axis. Alternatively, a valve may open in response to centrifugal forces resulting when it is rotated. The operation and/or speed of rotation of the sieve unit may thus be controllable thereby to provide indirect control of the opening and closing of the cavity outlet.

Thus, some examples make use of control signals sent to actuator valves, and other examples avoid the need for control signals by controlling instead the rotation.

A further alternative is to provide a manual lever control for opening and closing the cavity outlet. The user may then choose the time to perform the rotary sieving operation.

The nature of the juice provided to the outlet 32 may therefore be controlled simply based on a time sequence of the operation of the juicer as implemented by the controller 31 or manually under the control of the user.

In an automated process, the controller receives an indication of the type of fruit or vegetable to be juiced, a quantity, and the desired juice consistency of the user, such as clear juice, cloudy juice, a thin smoothie or a thick smoothie.

The controller then selects a time sequence. The time sequence defines the duration of the initial blending process, with the cavity outlet closed, the timing of the opening of the valves (or other outlet design), and the starting and stopping of sieve rotation after the valves have been opened.

The invention may be applied to small kitchen appliances, for example for one glass of juice with a drum capacity of approximately 0.5 liters as well as to large devices for entire families with a drum capacity up to 5 liters.

The use of the device is as simple as operating a blender and the cleaning requirements are similar to a centrifugal juicer.

By way of example, the cavity diameter may be of the order of 100mm (e.g. in the range 60mm to 150mm) and the cavity height may be in the range 150mm to 300mm, such as 200mm to 250mm. The dimensions of course depend on the desired volume capacity of the cavity.

Only one example of juicer design has been provided above. However, the concept of the invention may be applied to other designs.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A juicer for extracting juice from food ingredients comprising:
a cavity (12) for receiving the food ingredients, the cavity having an outlet which is adapted to be opened and closed;
a tool (18) in the cavity for releasing juice from the food ingredients;
a rotary sieve (22) for receiving food ingredients processed by the tool from the cavity outlet, the rotary sieve having an outer sieve wall (22b);
a drive system (26) for operating the tool to cut the food ingredients in the cavity, and for rotating the rotary sieve so as to pass juice through the outer sieve wall wherein the drive system enables independent control of the tool and the rotating of the sieve; and
a juice outlet (32) for providing juice which has passed through the outer sieve wall.

2. A juicer as claimed in claim 1, wherein the tool (18) comprises a rotary cutter such as a blender tool.

3. A juicer as claimed in claim 2, wherein the rotary cutter (18) is controllable with a first speed or range of speeds, and the rotary sieve (22) is controllable with a different second speed or range of speeds.

4. A juicer as claimed in claim 2 or 3, wherein the rotary cutter (18) and the rotary sieve are adapted to rotate about an upright axis in use.

5. A juicer as claimed in any one of claims 1 to 4, wherein the cavity outlet is at the base of the cavity and wherein the juicer comprises a valve (16) for opening and closing the outlet.

6. A juicer as claimed in any one of claims 1 to 4, wherein the rotary sieve comprises a base wall (22a) and the outer sieve wall, wherein the base wall (22a) defines the base of the cavity and the cavity further comprises a side wall.

7. A juicer as claimed in claim 6, wherein the base wall or the side wall is slidable parallel to an axis of rotation of the rotary sieve thereby to open or close the cavity outlet, thereby to allow or prevent the passage of food ingredients to the outer sieve wall.

8. A juicer as claimed in any one of claims 1 to 7, wherein the cavity outlet is opened induced by rotation of the rotary sieve.

9. A juicer as claimed in any one of claims 1 to 7 wherein the juicer comprises a manual control for opening and closing the cavity outlet.

10. A juicer as claimed in any one of claims 1 to 9, wherein the outer sieve wall (22b) comprises an annular wall which is sloped with respect to an axis of rotation of the rotary sieve.

11. A juicer as claimed in claim 10, comprising a collection region (24) for collecting non-sieved food ingredients which have been forced centrifugally over the annular wall.

12. A method for extracting juice from food ingredients, comprising:
placing food ingredients in a cavity which has a cavity outlet;
operating a tool in the cavity to release juice from the food ingredients with the cavity outlet closed;
opening the cavity outlet to allow the food ingredients to flow to a rotary sieve;
rotating the rotary sieve so as to pass juice through an outer sieve wall; and
providing juice which has passed through the outer sieve wall as the juicer outlet.

13. A method as claimed in claim 12, comprising opening the cavity outlet by:
moving the rotary sieve and the cavity relative to each other either automatically or in response to manual input.

14. A method as claimed in claim 12, comprising opening the cavity outlet by operating a valve.

15. A method as claimed in any one of claims 12 to 14, comprising collecting non-sieved food ingredients which have been forced centrifugally over the outer sieve wall.
